Europäisches Patentamt

European Patent Office

Office européen des brevets

(11) Publication number: **0 105 542**
**B1**

(12) **EUROPEAN PATENT SPECIFICATION**

(45) Date of publication of patent specification: **14.06.89**

(21) Application number: **83201266.0**

(22) Date of filing: **02.09.83**

(51) Int. Cl.⁴: **C 22 B 1/08,** C 01 G 1/06,
C 22 B 9/02, C 22 B 9/22,
C 22 B 34/12

(54) Process for producing metallic chlorides.

(30) Priority: **08.09.82 IT 2316782**

(43) Date of publication of application:
**18.04.84 Bulletin 84/16**

(45) Publication of the grant of the patent:
**14.06.89 Bulletin 89/24**

(84) Designated Contracting States:
**AT BE DE FR GB LU NL SE**

(56) References cited:
**EP-A-0 000 498**
**EP-A-0 005 018**
**GB-A-1 535 103**
**GB-A-2 077 767**
**US-A-3 954 954**
**US-A-3 989 510**
**US-A-4 086 084**

(73) Proprietor: **NUOVA SAMIM S.p.A.**
**Via Caldera 21**
**I-20153 Milan (IT)**

(72) Inventor: **d'Altilia, Gianluigi**
**Via E. Jenner 45**
**I-00151 Rome (IT)**

(74) Representative: **Roggero, Sergio et al**
**Ing. Barzanò & Zanardo Milano S.p.A. Via**
**Borgonuovo 10**
**I-20121 Milano (IT)**

Courier Press, Leamington Spa, England.

**Description**

This invention relates to a process for the production of metallic chlorides.

More particularly, this invention relates to a process for the production of metallic chlorides from compounds of metals, which contain oxygen, also in the form of complex salts or oxides of various metals.

Still more particularly, the present invention relates to a process for producing metallic chlorides starting from said compounds, when the latter are present in organic and/or inorganic inert materials at concentrations lower than 100%.

Metals occur in nature in complex chemical and mineralogical forms because of the gradual exhaustion of the primary sources which were particularly pure and simple from a structural standpoint, such sources having hitherto been preferentially exploited both due to the high purity (as a matter of fact impurities are a depreciation factor for the ore) and because of the demand by the metallurgical factories due to the technological characteristics and the yields of the extraction processes available.

At the same time, at present, the trend is towards recovering metals from the so-called secondary materials such as ore residues, metallurgic industry scraps, industrial scraps, industrial scraps of various origin; also in this case, materials are encountered in which more metals are present under various chemical forms, which can also be complexed.

The problem, thus, is to find out metallurgical treatments which are capable of recovering metals from materials which contain same in a chemical form which is more or less complex and in association with other metals which are otherwise interesting and also to find processes for separating the several metals from each other by single-step operations and/or treatments which are efficient and are technologically reliable.

In the light of these considerations, special attention deserve the chlorination runs, in which the metals which are contained in the materials to be treated are converted into chlorides, which, in their turn, are withdrawn from a reactor in the vapour state and thereafter-condensed, to be subjected to other subsequent physical processes to achieve their separation, such as fractional distillation and condensation, and chemical operations for extracting them, such as a shift of the metal one desires to extract in the chloride salt by means of another metal which has a greater affinity towards chlorine than the metal to be extracted, or the electrolysis of the melted chloride.

At present, the chlorination technology is used for primary pure raw materials (such as titanium from rutile), possibly coming from purification treatments, as is the case with alumina, but for complex materials this technology is not yet in use.

The pyrometallurgical reactors in use at present never exceed temperatures of 900°C—1000°C so that the mechanism of cleaving the bonds between the several oxides and the subsequent chlorination reaction in a reducing environment of such oxides never attains kinetic characteristics of commercial interest and in some cases it proves even impossible to provide the industrial technological conditions which are required for carrying out the chlorination reaction.

On the other hand it is not permissible to raise the temperature when working according to the known technology because of the chemical attack brought about by chlorine towards the refractory materials, which, due to the combined action of chlorine and heat collapse after a very short time.

Quite surprisingly, it has been found that the difficulties or even impossibilities of the conventional art can easily be circumvented by carrying out the chlorination step at a temperature above 1500°C, preferably 1800°C—2500°C and over, within a reaction zone provided with a packing of a solid reducing material.

EP—A—0 005 018 discloses a process for the production of titanium trichloride from a titaniferous ore which essentially contains Ti and Fe oxides by reacting the ore with chlorine at a temperature over 1500°C under reducing conditions, the chloride being discharged in the gaseous phase, the reducing conditions being obtained by mixing the ore with carbon, especially coke, in excess of the quantity required to react with the oxygen released by the ore oxides.

Therefore, the present invention provides a process for the production of chlorides from metallic compounds selected among the alumino-silicates of alkali metals and alkaline earth metals, the silicates of the metals of the Group III and/or IV and/or V of the Periodic Table of the Elements, titanates and zirconates, said process comprising the steps of continuously introducing into the bottom section of a reactor packed with lumped coke the metallic compounds, a chlorinating agents and a reducing agent together or separately, the reducing agent being a gaseous or a liquid hydrocarbon, reacting the mixture of metallic compound, chlorinating agent and reducing agent in an arc-plasma reaction zone at a temperature of from 1800°C to 2500°C, maintaining within the reactor a lumped coke column having a height sufficient to prevent the formed gaseous chlorides from escaping through the top of the reactor, discharging the chlorides out of the reactor via a pipe and separating them from each other by fractional condensation.

Preferred ore materials are leucite, alumite and the silicates of Zr, Ti, Mo, W, Pb, Zn, and, in general, aluminates, titanates and zirconates.

The reaction zone has, preferably, the form of a vat and the advantages which can be achieved by adopting the process according to the present invention, as defined hereinabove, can be summarized as follows:

1) Although the reaction takes place at comparatively high temperatures, the reactor walls are protected by the lumped solid reducing material;

2) The contact surface between the reactants is wide, by virtue of the lumped solid reducing material packing;

3) The bed of solid reducing material can be brought to a temperature above the condensation temperature of the highest-boiling chloride, or, still better, above the condensation temperature of the mixture of chlorides in the vapour phase, whereby the chlorides can conveniently be discharged through the top of the reaction zone.

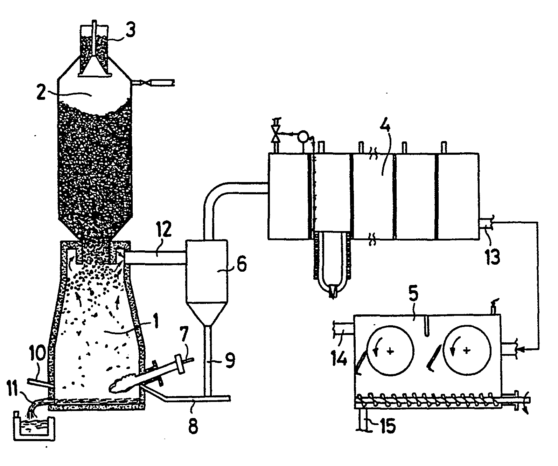

The invention is better illustrated in detail hereinafter with reference to the accompanying drawing which must not be intended as a limitation of the invention.

In the drawing, a reactor, 1, having the shape of a vat is packed with lumps of a solid reducing agent, preferably coke, which is renewed continuously by a cupola loader, 3, positioned at the reactor top. The coke column 2 has such a height as to prevent the chlorides in the gaseous phase from escaping through the reactor top instead of flowing through the pipe 12. Two level gauges, not shown, by interacting with the leading mechanisms (not shown), control the level of the coke column 2.

Injections of nitrogen, moreover, prevent the chlorides coming from the vat from exiting the reducing material charge. The coke to be used is a conventional cupola metallurgical coke, preferably dried, to prevent water from interacting with the chlorides to produce oxidized compounds in the condensation stage.

The lower section of the vat has pipes for introducing the charge and the chlorinating agent consisting of gaseous chlorine, the pipes being shown at 8 and 10.

The charge is preheated with coke dust or another solid reducing agent and both the charge and the coke are previously dried to prevent reactions of water and steam as outlined above and concurrently to prevent power consumption for drying in the reactor interior 1 and, finally, to provide a regular feed of the charge which should be fed at a grit size smaller than 5 mm by pneumatic conveyors, the active fluid being the chlorinating agent itself. In addition, there is an arc-plasma burner 7 with its feeding pipings.

In addition, the reactor bottom is provided with means for drawings the liquid phases, and such means are symbolically shown at 11.

The reactor temperature is controlled and the heat which is required to provide the appropriate thermodynamic conditions is supplied by the plasma torch, to which the gas adapted to provide the reducing conditions is supplied, for example CO, which is necessary for the reactions and thus has the function of plasma gas.

The material to be treated, which contains oxides or oxygen-containing compounds of any element, such as for example the oxides of alkaline earth metals and alkali metals, of iron, titanium, tungsten, vanadium, cobalt, silicon, nickel, manganese, lead, zinc, molybdenum, copper, bismuth, aluminium, zirconium, rare earth, yttrium, cadmium, chromium, antimony, tin, other oxides of the metals of the Groups III, IV of the Periodic System, the oxides contained in the polymetallic nodules of marine origin, either alone or admixed or combined in salts or various compounds such as for example silicates, silico-aluminates, aluminates and such like, is blown into the reaction zone of the reactor 1, using chlorine itself as the driving fluid, and is rapidly heated in the reactor to react and form the gaseous chlorination products. It cannot be excluded that a liquid phase might be formed, which did not react and thus becomes a slag: these products are collected at the reactor bottom and are drawn through the spill holes indicated at 11.

The reaction products, which are chlorides in the gaseous phase, rise to the oven top through the vat along the direction of the arrows and are withdrawn through the pipe 12.

Coke provides a permeable layer through which the reaction products can flow upwards whereas the slags and the liquid phases drop downwards, so that the coke bed has, in addition to those already mentioned in the foregoing, also the following functions:

a) to capture all the fine-grit material passing therethrough, and

b) to provide a reducing environment for the chlorination reaction and, if so required, to act as a reducing agent as such, and to ensure that such functions are brought about all the vat height throughout.

At any rate, with a view to saving metallurgical coke in lumps and avoid disturbing the coke bed itself with continuous addition of coke from the top, it is preferred to use a gaseous or a liquid hydrocarbon so as to provide an agent which provides a reducing function.

Such reducing agents can be supplied by means of separate nozzles, or they can be fed together with the ore feed which contains the metallic compounds and thus also together with the chlorinating agent, the gaseous chlorine, or as a fraction of the plasma gas, or entirely as the plasma gas. Finally, it is also possible to feed CO with the charge and/or together with the plasma gas.

At the exit from the vat via pipe 12, the gaseous chlorides flow into a hot cyclone, 6, to separate the coal or other solid particles which have possibly been entrained, such solid phases, 9, being immediately recycled, whereafter the gaseous chlorides flow into a labyrinth condenser, 4 consisting of a number of refractory-lined chambers having inlet ports staggered both in the vertical and the horizontal directions, each chamber having at its bottom a crucible of graphite of another refractory material having an appropriate magnetic susceptivity, which is optionally heated by an induction ring, each chamber being fitted with an inlet for a cold inert gas, such as nitrogen or cold recycle gas (temperature below 100°C). The function of the condenser 4 is to collect the liquid chlorides, but not the chlorides for which the possibility of formation of liquid phases is not predictable under normal conditions, such as for example the chlorides of zirconium, aluminium and nickel which, as is well known, vaporize without melting.

Consequently, the temperature at the outlet 13 of the condenser 4 must be such as to prevent conditions favourable to the solidification of chlorides within such condenser: it is for this purpose that induction heaters have been provided in the chloride collecting crucibles of the several chambers so as to melt or vaporize possible incrustations. The chlorides which vaporize without melting, as mentioned above, or the vapours of those chlorides which have not yet been condensed, are solidified in the next condenser 5, which consists of a refractory-lined chamber having an inlet for a cold inert gas, two or more drums rotatable about an axis perpendicular to the direction of flow of the incoming gas/chloride stream and fitted with means for having water circulated internally thereof under pressure, doctor blades for scraping off the condensed chlorides from the drum surfaces, a conveying screw positioned at the bottom to withdraw the scales scraped off by the doctor blades and collected by the downward sloping chamber walls.

The chlorides are discharged through 15.

In the outlet 14 there could be left a few low-boiling chlorides, such as for example silicon tetrachloride, to be sent to a conventional cooling section or, directly in its gaseous phase, to the next metal recovery treatment.

The gas which is left after the condensations, supplemented by other inert gas (nitrogen) can be recycled to the apparatus 4 and 5, or it can be sent to a combustion section for recovering heat.

In order that the invention may be further illustrated in terms of its procedure, reference is invited to the following examples which should not be taken as limitations of the invention.

### Example 1

An iron-stripped leucite concentrate (theoretical formula $K\ Al\ Si_2O_6$) has been treated, with the following composition for the principal and interesting elements:

$SiO_2$: 55% — $K_2O$: 18% — $Al_2O_3$: 21% — Others: 9%

This is a naturally occurring ore.

For a ton of leucite, and limitedly to the reactor 1 shown in the accompaning drawing, that is vat-plasma system, the following consumption values for reducing agents, chlorine and electricity have been ascertained:

Coke dust: 300 kg; Metallurgical coke: 100 kg (size used 20 to 40 mm) — Chlorine: 2000 kg — Electric power: 1300 kWh.

For each ton (1000 kg) of starting product (leucite concentrate) there have been obtained the following outputs:

Aluminium chloride: 520 kg — Silicon chloride: 1400 kg — Potassium chloride: 270 kg.

The plasma gas had a temperature of 8000°C so as to have the reactions taking place at 2000°C. The temperature at the vat top and at the outlet 12 was 1500°C.

### Example 2

Residual sludges of the ceramic industry, which had previously been dried, have been treated, which had the following composition with reference to the most interesting elements:

Lead: 20% — Zirconium 7% — Silicon 30%, the balance being oxygen and several other metals at a very low concentration (less than 0.1%).

From one ton of dried sludge there have been obtained the following products:

Lead chloride: 250 kg — Silicon chloride: 1700 kg — Zirconium chloride: 170 kg

for which the relative consumptions were:

Coke dust: 200 kg — Metallurgical coke: 70 kg (size 20 to 40 mm) — Chlorine: 1600 kg — Electric power: 1100 kWh.

The plasma gas has been fed at 8000°C so as to have a processing temperature of 2000°C. The gases at the vat top outlet, 12, had a temperature of 1500°C.

In both Examples 1 and 2, CO was used as the plasma gas.

**Claims**

1. A process for the production of chlorides from metallic compounds selected among the alumino-silicates of alkali metals and alkaline earth metals, the silicates of the metals of the Group III and/or IV and/or V of the Periodic Table of the Elements, titanates and zirconates, said process comprising the steps of continuously introducing into the bottom section of a reactor (1) packed with lumped coke the metallic compounds, a chlorinating agent and a reducing agent together or separately, the reducing agent being a gaseous or a liquid hydrocarbon, reacting the mixture of metallic compound, chlorinating agent and reducing agent in an arc-plasma reaction zone at a temperature of from 1800°C to 2500°C, maintaining within the reactor a lumped coke column having a height sufficient to prevent the formed gaseous chlorides from escaping through the top of the reactor (1), discharging the chlorides out of the reactor via a pipe (12) and separating them from each other by fractional condensation.

2. A process according to claim 1, characterized in that the size of the charge of metallic compounds is less than 5 mm.

3. A process according to claim 1, characterized in that said chlorinating agent is chlorine.

4. A process according to claim 1, characterized in that said chlorinating agent is a compound capable of evolving gaseous chlorine on decomposition.

5. A process according to claim 1, characterized in that the vaporized chlorides exiting the pipe (12) are stripped of the entrained solid particles in a hot cyclone (6), said solid particles being recycled (9) to the arc-plasma reaction zone together with the charge (8).

6. A process according to claim 1, characterized in that the condensable chlorides are collected in a labyrinth condenser (4), whereafter the chlorides are solidified and collected in a water-cooled rotatable-drums assembly (5) equipped with doctor blades mounted tangentially of the drums, and subsequently discharged from said drums.

7. A process according to claim 1, characterized in that the reducing agent is carbon monoxide.

8. A process according to claim 7, characterized in that carbon monoxide is added to the arc-plasma-burner feedstock (7).

**Patentansprüche**

1. Verfahren zur Herstellung von Chloriden aus Metallverbindungen, ausgewählt unter den Aluminosilikaten von Alkalimetallen und Erdalkalimetallen, den Silikaten von Metallen der Gruppe III und/oder IV und/oder V des Periodensystems der Elemente, Titanaten und Zirkonaten, welches Verfahren die Stufen eines kontinuierlichen, in den Unterteil eines mit stückigem Koks gepackten Reaktors (1) erfolgenden Einführens der Metallverbindungen, eines Chlorierungsmittels und eines Reduktionsmittels, zusammen oder getrennt, wobei das Reduktionsmittel ein gasförmiger oder flüssiger Kohlenwasserstoff ist, eines Umsetzens des Gemisches aus Metallverbindung, Chlorierungsmittel und Reduktionsmittel in einer Plasmabogen-Reaktionszone bei einer Temperatur von 1.800°C bis 2.500°C, eines Aufrechterhaltens einer Säule aus stückigem Koks innerhalb des Reaktors mit einer zur Verhinderung eines Entweichens der gebildeten gasförmigen Chloride über den Kopf des Reaktors (1) ausreichenden Höhe, eines Abführens der Chloride aus dem Reaktor über ein Rohr (12) und eines Trennens der Chloride voneinander durch fraktionierte Kondensation umfaßt.

2. Verfahren nach Anspruch 1, dadurch gekennzeichnet, daß die Größe der Charge der Metallverbindungen kleiner als 5 mm ist.

3. Verfahren nach Anspruch 1, dadurch gekennzeichnet, daß das Chlorierungsmittel Chlor ist.

4. Verfahren nach Anspruch 1, dadurch gekennzeichnet, daß das Chlorierungsmittel eine bei Zersetzung zur Entwicklung von gasförmigem Chlor befähigte Verbindung ist.

5. Verfahren nach Anspruch 1, dadurch gekennzeichnet, daß die das Rohr (12) verlassenden verdampften Chloride in einem Heißzyklon (6) von mitgeführten Feststoffteilchen befreit werden, die zusammen mit der Charge (8) zur Plasmabogen-Reaktionszone zurückgeführt werden (9).

6. Verfahren nach Anspruch 1, dadurch gekennzeichnet, daß die kondensierbaren Chloride in einem Labyrinth-Kondensator (4) gesammelt werden, wonach die Chloride verfestigt und in einer wassergekühlten Vorrichtung (5) mit rotierenden Trommeln gesammelt werden, die mit tangentenial zu den Trommeln montierten Abstreifmessern ausgerüstet sind, und die Chloride anschließend von diesen Trommeln abgenommen werden.

7. Verfahren nach Anspruch 1, dadurch gekennzeichnet, daß das Reduktionsmittel Kohlenmonoxid ist.

8. Verfahren nach Anspruch 7, dadurch gekennzeichnet, daß Kohlenmonoxid dem Plasmabogen-Brennereinsatzmaterial (7) zugesetzt wird.

**Revendications**

1. Procédé de production de chlorures à partir de composés métalliques choisis parmi les aluminosilicates de métaux alcalins et alcalino-terreux, les silicates des métaux des groupes III et/ou IV et/ou V du Tableau Périodique des Eléments, les titanates et les zirconates, ledit procédé comprenant les étapes qui consistent à introduire en continu au bas d'un réacteur (1) garni de coke aggloméré, ensemble ou séparément, les composés métalliques, un agent de chloration et un agent réducteur, ce dernier étant un hydrocarbure gazeux ou liquide, à faire réagir le mélange de composés métalliques, agent de chloration et agent réducteur dans une zone de réaction d'un plasma d'arc, à une température de 1800°C à 2500°C, à maintenir à l'intérieur du réacteur une colonne de coke aggloméré ayant une hauteur suffisante pour empêcher les chlorures gazeux formés de s'échapper par le haut du réacteur (1), à évacuer les chlorures hors du réacteur par une tuyauterie (12) et à les séparer les uns des autres par condensation fractionnée.

2. Procédé selon la revendication 1, caractérisé en ce que la taille de la charge des composés métalliques est intérieure à 5 mm.

3. Procédé selon la revendication 1, caractérisé en ce que l'agent de chloration est le chlore.

4. Procédé selon la revendication 1, caractérisé en ce que l'agent de chloration est un composé susceptible de dégager du chlore gazeux par décomposition.

5. Procédé selon la revendication 1, caractérisé en ce que les chlorures vaporisés sortant de la tuyauterie (12) sont débarrassés des particules solides entraînées dans un cyclone chaud (6), lesdites particules solides étant recyclées (9) dans la zone de réaction du plasma d'arc avec la charge (8).

6. Procédé selon la revendication 1, caractérisé en ce que les chlorures condensables sont recueillis dans un condenseur à labyrinthe (4), après quoi les chlorures sont solidifiés et rassemblés dans un montage (5) à tambours rotatifs refroidis à l'eau, équipé de lames de racloir montées tangentiellement aux tambours, et ensuite évacués à partir desdits tambours.

7. Procédé selon la revendication 1, caractérisé en ce que l'agent réducteur est le monoxyde de carbone.

8. Procédé selon la revendication 7, caractérisé en ce que le monoxyde de carbone est ajouté à la charge d'alimentation (7) du brûleur à plasma d'arc.